# DEMANDE DE BREVET EUROPEEN

(11) **EP 2 112 769 A1**
(43) Date de publication de la demande: **28.10.2009**
(21) Numéro de dépôt: 09158429.2
(22) Date de dépôt: 22.04.2009
(51) Int. Cl.: H04B 1/707

(54) **Dispositif et procédé de recherche de synchronisation avec un équipement de communication radio pour une station de base d'un réseau de radiocommunication**

(30) Priorité: 23.04.2008 FR 0852743
(71) Demandeur: Alcatel Lucent, 75008 Paris (FR)
(72) Inventeur: Lagrange, Patrick, 78141, VELIZY (FR); Jard, Alexandre, 91620, NOZAY (FR); Georgeaux, Eric, 91620, NOZAY (FR)
(74) Mandataire: Ameline, Jean-Paul B.C.

(57) **Abrégé**

Un dispositif (D) est dédié à la recherche de synchronisation avec un équipement radio (UE1) pour une station de base cible (SB2) d'un réseau de radiocommunication (RC), au sein d'une cellule de taille donnée correspondant à une fenêtre de recherche présentant une première largeur. Ce dispositif comprend i) des moyens de définition (MD) chargés de définir une de largeur inférieure à la première largeur, et ii) des moyens d'analyse (MA) chargés de comparer à un seuil choisi la valseur maximale de l'énergie d'un vecteur d'énergie représentatif du signal reçu de l'équipement (UE1) et correspondant à une position temporelle choisie de la sous-fenêtre de recherche, et si cette valeur maximale est inférieure au seuil choisi de cumuler son vecteur d'énergie avec le vecteur d'énergie obtenu précédemment pour cette même sous-fenêtre de recherche, puis de comparer au seuil choisi la valeur maximale de l'énergie du vecteur d'énergie, résultant de ce cumul, et de réitérer ce cumul et cette comparaison de seuil pour cette sous-fenêtre de recherche tant que la valeur maximale demeure inférieure au seuil choisi et/ou qu'un nombre maximal d'itérations choisi n'est pas atteint.

## Description

L'invention concerne les réseaux de radiocommunication, en particulier ceux à accès multiple par répartition en code (ou CDMA (pour « Code Division Multiple Access »)).

Comme le sait l'homme de l'art, il existe différents cas de figure dans lesquels un équipement (de communication) radio d'usagers est amené à se synchroniser avec une station de base d'un réseau de radiocommunication. C'est le cas par exemple lorsque l'équipement est allumé après avoir été éteint. D'autre part, dans un réseau non filaire mettant en oeuvre des procédures de transferts ou partages d'appels ou de session de type dit « doux » (ou « soft handhovers ») effectués entre des équipements (de communication) radio d'usagers et des stations de base (ou analogues) de leurs réseaux d'accès radio, les équipements (de communication) radio d'usagers peuvent être simultanément connectés à plusieurs stations de base (ou analogues) d'un réseau d'accès radio. Il arrive donc fréquemment qu'un équipement d'usager soit obligé de se connecter à une nouvelle station de base dite cible. Pour ce faire, cette dernière doit se synchroniser sur l'équipement d'usager. Etant donné qu'elle ne dispose d'aucune information relative à la base de temps (ou « timing ») de l'équipement d'usager, elle doit alors effectuer une procédure de recherche de synchronisation.

Cette dernière procédure consiste généralement à balayer toutes les positions temporelles (contenues à l'intérieur de ce que l'on appelle la fenêtre de recherche), qui correspondent aux distances possibles entre elle et l'équipement d'usager, en effectuant, dans le cas d'un réseau de radiocommunication de type CDMA, des corrélations au moyen d'un code qui est dédié à cet équipement d'usager.

Par exemple, dans un réseau de type UMTS (« Universal Mobile Telecommunication System ») si l'on désigne par D la taille d'une cellule du réseau d'accès radio UTRAN, par Tc la durée d'un élément de base (ou élémentaire) du code d'étalement (ou « time chip ») et par C la vitesse de la lumière, alors la largeur n de la fenêtre de recherche en terme d'échantillons numériques est donnée par la relation n = 2×D/(Tc×C). De cette relation on déduit que, pour une cellule de taille D égale à 40 km d'un réseau de type UMTS (dans lequel Tc est égale à 0,26042 µs), la fenêtre de recherche doit présenter une largeur n égale à 1024 échantillons numériques.

La détection des pics d'énergie associés aux n échantillons numériques se fait au moyen d'une comparaison de la valeur maximale, de l'énergie d'un vecteur d'énergie correspondant à un vecteur d'échantillons numériques d'un signal reçu d'un équipement radio, à un seuil prédéterminé qui dépend de la taille de la cellule et d'un nombre maximal d'itérations choisi et qui est destiné à atteindre une probabilité choisie de taux de fausse alarme. Tant que le seuil prédéterminé et le nombre maximal d'itérations choisi ne sont pas atteints, on accumule les vecteurs d'énergie pour chaque position temporelle de la fenêtre de recherche. Lorsque le seuil prédéterminé et/ou le nombre maximal d'itérations choisi est/sont atteint(s), on considère que l'on est synchronisé avec l'équipement d'usager et donc qu'une communication peut débuter entre ce dernier et la station de base qui vient d'effectuer la procédure de recherche de synchronisation.

Cette procédure de recherche de synchronisation donne des résultats satisfaisants tant que les tailles des cellules correspondent aux tailles pour lesquelles les modems des stations de base ont été initialement conçus. Mais, pour des cellules de (très) grandes tailles (c'est-à-dire (très) supérieures aux capacités des modems des stations de base), comme c'est par exemple le cas dans des zones très vastes et très peu peuplées, ou côtières et isolées, elle devient techniquement très difficile à mettre en oeuvre. En effet, le nombre d'échantillons numériques variant linéairement en fonction de la taille de la cellule, on comprendra que plus cette dernière est grande, plus le procédé précité nécessite de mémoire et de capacités de traitement (ou CPU). A titre d'exemple, dans le cas d'une cellule UMTS dont la taille D est égale à 160 km, la fenêtre de recherche doit présenter une largeur n égale à 4096 échantillons numériques. Dans ces conditions, il devient très difficile, voire impossible, pour un modem (modulateur/démodulateur) de station de base d'effectuer sensiblement simultanément plusieurs procédures de recherche de synchronisation car il est initialement agencé pour une plus petite taille de cellule.

Afin de remédier à l'inconvénient présenté ci-avant deux solutions ont été proposées. La première solution consiste à paralléliser la procédure de recherche de synchronisation en la subdivisant en sous-procédures parallèles dans des fenêtres de recherche dont la largeur est égale à une fraction de la fenêtre de recherche correspondant à la cellule concernée. Mais, cela complexifie notablement la recherche et nécessite d'augmenter notablement les capacités de traitement. La seconde solution consiste à sérialiser la procédure de recherche de synchronisation, mais cela augmente la durée de la recherche et donc nuit aux performances radio tout en accroissant la durée d'accès.

L'invention a donc pour but d'améliorer la situation.

Elle propose à cet effet un procédé dédié à la recherche de synchronisation avec un équipement de communication radio pour une station de base (ou analogue), d'un réseau d'accès radio d'un réseau de radiocommunication, au sein d'une cellule de taille donnée correspondant à une fenêtre de recherche présentant une première largeur.

Ce procédé comprend :
- une première étape dans laquelle on définit une sous-fenêtre de recherche de largeur inférieure à la première largeur, et
- une seconde étape dans laquelle on compare à un seuil choisi la valeur maximale de l'énergie d'un vecteur d'énergie représentatif du signal reçu de l'équipement et correspondant à une position temporelle choisie de la sous-fenêtre de recherche, et si cette valeur maximale est inférieure au seuil choisi on cumule son vecteur d'énergie avec le vecteur d'énergie obtenu précédemment pour cette même sous-fenêtre de recherche, puis on compare au seuil choisi la valeur maximale de l'énergie du vecteur d'énergie résultant de ce cumul, et on réitère ce cumul et cette comparaison de seuil pour cette sous-fenêtre de recherche tant que la valeur maximale demeure inférieure au seuil choisi et/ou qu'un nombre maximal d'itérations choisi n'est pas atteint.

Le procédé selon l'invention peut comporter d'autres caractéristiques qui peuvent être prises séparément ou en combinaison, et notamment :
- lors de la seconde étape, lorsque le nombre maximal d'itérations choisi est atteint mais que la valeur maximale demeure inférieure au seuil choisi, on peut recommencer intégralement la seconde étape avec une nouvelle sous-fenêtre de la fenêtre de recherche ;
- lors de la première étape on peut définir la sous-fenêtre de recherche en fonction d'une mesure d'une grandeur, représentative de la puissance des signaux reçus par ledit équipement (UEi) en provenance de ladite station de base cible (SBj), fournie audit réseau d'accès radio (RAR) par ledit équipement (UEi), dans le cadre d'un transfert d'appel ou de session de type dit « doux », et éventuellement utiliser pour ce faire, dans un réseau de radiocommunication de type WCDMA, une grandeur appelée RSCP (pour « Received Signal Code Power » - puissance de signal reçu) ;
- lors de la première étape on peut choisir la première position temporelle en fonction d'un modèle déterministe prédéfini et/ou d'une procédure d'apprentissage statistique ;
   ➢ le modèle déterministe prédéfini peut consister à choisir la position dans une table de correspondance entre des valeurs de grandeur et des positions temporelles ;
   ➢ la procédure d'apprentissage statistique peut consister à déterminer dans la table de correspondance la position temporelle qui est la plus probable compte tenu de la valeur de grandeur fournie par l'équipement radio, cette position temporelle déterminée étant alors la première position temporelle choisie.
      - la table de correspondance peut par exemple être prédéfinie ;
      - en variante, la table de correspondance peut par exemple être constituée à partir des valeurs de grandeur qui correspondent aux positions temporelles pour lesquelles une synchronisation a été obtenue ;
- lors de la première étape on peut choisir une largeur de sous-fenêtre égale à la largeur maximale de fenêtre de recherche que la station de base cible peut traiter.

L'invention propose également un dispositif dédié à la recherche de synchronisation avec un équipement de communication radio, pour une station de base dite cible d'un réseau d'accès radio d'un réseau de radiocommunication , au sein d'une cellule de taille donnée correspondant à une fenêtre de recherche présentant une première largeur.

Ce dispositif comprend :
- des moyens de définition chargés de définir une sous-fenêtre de recherche de largeur inférieure à la première largeur, et
- des moyens d'analyse chargés de comparer à un seuil choisi la valeur maximale de l'énergie d'un vecteur d'énergie représentatif du signal reçu de l'équipement et correspondant à une position temporelle choisie de la sous-fenêtre de recherche, et si cette valeur maximale est inférieure au seuil choisi de cumuler son vecteur d'énergie avec le vecteur d'énergie obtenu précédemment pour cette même sous-fenêtre de recherche, puis de comparer au seuil choisi la valeur maximale de l'énergie du vecteur d'énergie résultant de ce cumul, et de réitérer ce cumul et cette comparaison de seuil pour cette sous-fenêtre de recherche tant que la valeur maximale demeure inférieure au seuil choisi et/ou qu'un nombre maximal d'itérations choisi n'est pas atteint.

Le dispositif selon l'invention peut comporter d'autres caractéristiques qui peuvent être prises séparément ou en combinaison, et notamment :
- ses moyens d'analyse peuvent être chargés, lorsque le nombre maximal d'itérations choisi est atteint et que la valeur maximale demeure inférieure au seuil choisi, de recommencer intégralement leur analyse avec une nouvelle sous-fenêtre de la fenêtre de recherche ;
- ses moyens de définition peuvent être agencés pour définir la sous-fenêtre de recherche en fonction de la mesure d'une grandeur (qui est représentative de la puissance des signaux reçus par l'équipement en provenance de la station de base cible), fournie au réseau d'accès radio par l'équipement. Ils peuvent en outre être chargés, dans le cas où le réseau de radiocommunication est de type WCDMA, d'utiliser une grandeur appelée RSCP ;
- ses moyens de définition peuvent être chargés de choisir la première position temporelle en fonction d'un modèle déterministe prédéfini et/ou d'une procédure d'apprentissage statistique ;
   ➢ ses moyens de définition peuvent être chargés de mettre en oeuvre un modèle déterministe prédéfini consistant à choisir la position dans une table de correspondance entre des valeurs de grandeur et des positions temporelles, stockée dans des moyens de stockage ;
   ➢ ses moyens de définition peuvent être chargés de mettre en oeuvre une procédure d'apprentissage statistique consistant à déterminer dans la table de correspondance la position temporelle qui est la plus probable compte tenu de la valeur de grandeur fournie par l'équipement, cette position temporelle déterminée étant alors la première position temporelle choisie ;
      - la table de correspondance peut par exemple être prédéfinie ;
      - en variante, ses moyens d'analyse peuvent être chargés de constituer la table de correspondance à partir des valeurs de grandeur qui correspondent aux positions temporelles pour lesquelles une synchronisation a été obtenue ;
- ses moyens de définition peuvent être chargés de choisir une largeur de sous-fenêtre égale à une largeur maximale de fenêtre de recherche que la station de base cible peut traiter.

L'invention propose également une station de base, pour un réseau d'accès radio d'un réseau de radiocommunication, et équipée d'un dispositif de recherche de synchronisation du type de celui présenté ci-avant.

D'autres caractéristiques et avantages de l'invention apparaîtront à l'examen de la description détaillée ci-après, et des dessins annexés, sur lesquels :
- la figure 1 illustre de façon très schématique et fonctionnelle un réseau de communication de type CDMA comportant un réseau d'accès radio dont les stations de base sont équipées d'un dispositif de recherche de synchronisation selon l'invention,
- la figure 2 illustre de façon très schématique et fonctionnelle une station de base équipée d'un exemple de réalisation de dispositif de recherche de synchronisation selon l'invention, et
- la figure 3 illustre de façon schématique un exemple d'algorithme permettant de mettre en oeuvre un procédé de recherche de synchronisation selon l'invention.

Les dessins annexés pourront non seulement servir à compléter l'invention, mais aussi contribuer à sa définition, le cas échéant.

L'invention a pour objet de faciliter la synchronisation d'une station de base (ou analogue), d'un réseau d'accès radio d'un réseau de radiocommunication , avec un équipement de communication radio (ou non filaire), en particulier dans le cadre d'un transfert d'appel ou de session de type dit « doux » (ou « soft handhover »).

L'invention est décrite ci-après dans son application aux systèmes de troisième génération de type UMTS. Cette description n'est pas limitative. Dans ce qui suit, on considère ainsi à titre d'exemple non limitatif que le réseau de radiocommunication est à accès multiple par répartition en code (RC), de type W-CDMA, comme par exemple un réseau UMTS. Mais, l'invention n'est pas limitée à ce type de réseau. Elle concerne en effet tous les réseaux de communication non filaires, et notamment ceux qui mettent en oeuvre des soft handhovers, notamment les réseaux à répartition en mode circuit, comme par exemple les réseaux de type CDMA et CDMA-2000, et les réseaux à répartition en mode paquet, comme par exemple les réseaux de type W-CDMA (tels que les réseaux UMTS ou FOMA).

Par ailleurs, on considère dans ce qui suit, à titre d'exemple non limitatif, que les équipements de communication non filaires (ou radio) (UEi) sont des téléphones mobiles (ou cellulaires). Mais, l'invention n'est pas limitée à ce type d'équipement de communication non filaire. Elle concerne en effet tous les équipements (ou terminaux) électroniques, mobiles (ou cellulaires) ou portables, capables d'établir des communications avec un réseau de radiocommunication. Par conséquent, il pourra également s'agir d'ordinateurs portables, d'assistants personnels numériques (ou PDAs), ou de récepteurs de contenus, dès lors qu'ils sont équipés de moyens de communication non filaires.

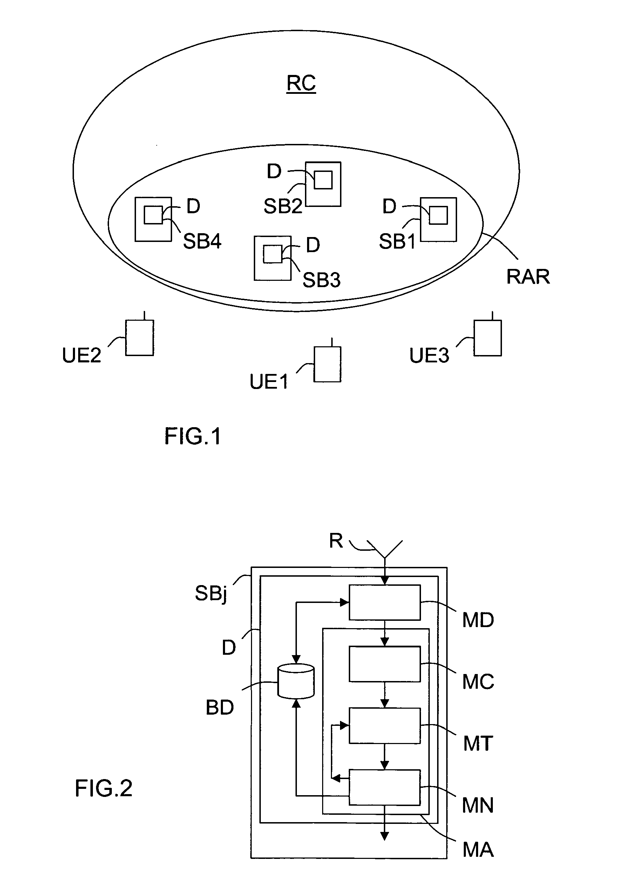

Comme cela est illustré sur la figure 1, un réseau (de communication non filaire) RC (ici de type UMTS) peut, d'une façon très schématique mais néanmoins suffisante à la compréhension de l'invention, être résumé à un coeur de réseau (ou « Core Network » en anglais) couplé à un réseau d'accès radio RAR, lui-même raccordé à un système de gestion de réseau ou NMS (pour « Network Management System »), non représenté.

Le réseau d'accès radio RAR comporte principalement des stations de base SBj (appelées Node Bs dans le cas d'un réseau UMTS) et des contrôleurs de réseau radio (appelés RNCs dans le cas d'un réseau UMTS - ici non représentés), raccordés entre eux.

Chaque station de base SBj est associée à au moins une cellule (logique) couvrant une partie de la zone de couverture radio du réseau RC et dans laquelle des équipements (de communication non filaire) UEi (ici des téléphones mobiles) peuvent établir (ou poursuivre) des communications (ou liaisons) ou sessions radio. Chaque contrôleur de réseau radio est associé à au moins une cellule (logique) et est donc couplé à au moins une station de base SBj.

Dans l'exemple de réalisation non limitatif illustré sur la figure 1, le réseau d'accès radio RAR comporte quatre stations de base SB1 à SB4 (j = 1 à 4). Mais, l'invention n'est pas limitée à ce nombre de stations de base SBj. Elle concerne en effet les réseaux d'accès radio RAR qui comprennent au moins deux stations de base. Par ailleurs, dans l'exemple de réalisation non limitatif illustré sur la figure 1, on a représenté trois équipements radio UE1 à UE3 (i = 1 à 3). Mais, l'invention n'est pas limitée à ce nombre d'équipements radio UEi. Elle s'applique dès lors qu'il y a au moins un équipement radio UEi.

Afin de faciliter les soft handovers dans le réseau RC, par exemple lorsque les cellules présentent des tailles supérieures à celles pour lesquelles les modems des stations de base SBj ont été initialement conçus, ou afin d'économiser des capacités de calcul (ou CPU), et donc de la surface de silicium, de manière à réduire le coût tout en ayant un niveau de performance acceptable, l'invention propose d'équiper ces stations de base SBj d'un dispositif de recherche de synchronisation D.

On entend ici par « équiper une station de base SBj » le fait de coupler un dispositif D à une station de base SBj ou d'implanter un dispositif D dans une station de base SBj (comme dans l'exemple non limitatif illustré sur les figures 1 et 2).

Comme cela est illustré sur la figure 2, un dispositif (de recherche de synchronisation) D, selon l'invention, comprend au moins un module de définition MD et un module d'analyse MA. Dans un premier mode de mise en oeuvre de l'invention, il intervient chaque fois que sa station de base SBj, alors dite cible, doit établir une communication avec un équipement radio UEi qui est impliqué dans un soft handover, afin de se synchroniser sur cet équipement radio (c'est-à-dire connaître sa base de temps (ou « timing »)). Dans un second mode de mise en oeuvre de l'invention, il intervient chaque fois que sa station de base SBj doit établir une communication avec un équipement radio UEi en cours de synchronisation initiale.

Il est rappelé qu'un soft handover consiste en un transfert ou un partage de communication ou de session entre cellules (logiques) voisines dont la taille D est connue et donc correspond à une fenêtre de recherche W qui présente une (première) largeur n_{W} en terme de nombre d'échantillons numériques. A titre d'exemple non limitatif, la fenêtre de recherche qui correspond à une cellule de taille D égale à 40 km, d'un réseau de type UMTS, présente une largeur n_{W} égale à 1024 échantillons numériques.

Dans le premier mode de réalisation de l'invention, le module de définition MD reçoit de sa station de base cible SBj la mesure P d'une grandeur qui est représentative de la puissance des signaux qui sont reçus par l'équipement radio UEi (impliqué dans le soft handover) en provenance de cette station de base cible SBj. Cette mesure de grandeur est effectuée par l'équipement radio UEi et transmise par ce dernier, par voie d'ondes, au réseau d'accès radio RAR, qui se charge alors de la transmettre à la station de base cible SBj. Au sein du réseau d'accès radio RAR, cette transmission se fait de la station de base SBj' qui reçoit la mesure, vers le contrôleur de réseau radio auquel cette dernière est connectée, puis de ce contrôleur de réseau radio vers le module de réception R de la station de base cible SBj.

Par exemple, l'équipement radio peut mesurer une grandeur qui est appelée RSCP (pour « Received Signal Code Power » - puissance de signal reçu). Cette grandeur RSCP fournit une bonne estimation de la perte de puissance sur le trajet séparant la station de base cible SBj de l'équipement radio UEi. Il est en effet ici considéré que dans une première approximation cette perte de puissance dans le sens allant de la station de base cible SBj vers l'équipement radio UEi est sensiblement identique à celle dans le sens inverse (c'est-à-dire de l'équipement radio UEi vers la station de base cible SBj). On notera que l'on peut utiliser toute autre grandeur standard ou propriétaire représentative d'une distance entre un équipement radio UEi et une station de base SBj.

Le module de définition MD est chargé de définir une sous-fenêtre de recherche S de largeur n_{S} inférieure à la première largeur n_{W}. Dans le premier mode de réalisation de l'invention, cette sous-fenêtre est définie en fonction de la mesure de grandeur qui est issue de l'équipement radio UEi. On notera que dans le cas où l'algorithme de détermination de la sous-fenêtre de recherche S est configuré pour utiliser une grandeur, choisie issue de l'équipement radio UEi dans le cas du soft-handover, on peut choisir aléatoirement cette grandeur dans le cas d'une synchronisation initiale.

D'autre part, par exemple, le module de définition MD peut être agencé de manière à choisir systématiquement une largeur n_{S} de sous-fenêtre S égale à la largeur maximale de la fenêtre de recherche que le modem de la station de base cible SBj peut traiter.

Le module d'analyse MA est tout d'abord chargé de comparer à au moins un seuil choisi η1(I) la valeur maximale de l'énergie du vecteur d'énergie qui correspond au vecteur d'échantillons numériques d'un signal qui est issu de l'équipement radio UEi et qui correspond à une première position temporelle d_{S} choisie de la sous-fenêtre de recherche S qui a été définie et donc initialement choisie par le module de définition MD.

Comme cela est non limitativement illustré sur la figure 2, afin d'obtenir la valeur maximale de l'énergie de chaque vecteur d'énergie qui correspond au vecteur d'échantillons numériques (et donc à une position temporelle d_{S} dans une sous-fenêtre S), le module d'analyse MA peut comprendre un sous-module de corrélation MC couplé à un sous-module de traitement MT. Il est rappelé qu'à un instant t, on reçoit une partie d'un signal qui est définie par un vecteur de N échantillons numériques instantanés.

Plus précisément, le sous-module de corrélation MC est chargé de corréler chaque vecteur de N échantillons numériques instantanés (représentatif du signal qui est reçu par le module de réception R de sa station de base cible SBj et qui est issu de l'équipement radio UEi) à un code qui est spécifiquement dédié à ce dernier (UEi).

Le sous-module de traitement MT est tout d'abord chargé de déterminer le module au carré de chaque échantillon numérique du vecteur de N échantillons numériques instantanés du signal reçu (qui a été corrélé par le sous-module de corrélation MC), afin d'obtenir un vecteur de taille N représentatif de l'énergie, ici appelé vecteur énergie x(t). Il est également chargé d'appliquer un retard choisi à chaque vecteur énergie x(t) pour moyenner sa valeur en cours avec la précédente valeur moyenne, dont la valeur initiale est nulle, ce qui revient à cumuler le vecteur énergie x(t) qui vient d'être obtenu à la valeur du vecteur d'accumulation précédent y(t-1) pour obtenir le vecteur d'accumulation en cours y(t) (avec y(t) = x(t) + y(t-1), et y(0) = 0). Il peut être ensuite chargé de déterminer la valeur maximale Ec de l'énergie du vecteur d'accumulation en cours y(t), lequel correspond au vecteur de N échantillons numériques instantanés traité.

Par ailleurs, et comme cela est non limitativement illustré sur la figure 2, le module d'analyse MA peut également comprendre un sous-module de comparaison MN chargé d'effectuer chaque comparaison de la valeur maximale Ec, de l'énergie du vecteur d'énergie qui est représenté par le vecteur d'accumulation en cours y(t), délivrée par le sous-module de traitement MT et qui correspond à une position temporelle d_{S} de la sous-fenêtre de recherche S, à au moins le seuil choisi η1(I).

Si la valeur maximale Ec de l'énergie du vecteur d'énergie (qui correspond à la première position temporelle d_{S} de la première sous-fenêtre de recherche S choisie) est supérieure au seuil choisi η1(I), cela signifie que la synchronisation est obtenue pour cette première position temporelle d_{S}.

Dans le cas contraire (Ec < η1(I)), le module d'analyse MA détermine le vecteur d'énergie qui est représenté par le vecteur d'accumulation suivant « y(t+1) », lequel correspond à l'occurrence suivante de la première sous-fenêtre de recherche S choisie, afin de le cumuler avec le vecteur d'énergie qui est représenté par ce qui est désormais le « précédent » vecteur d'accumulation « y(t) », et qui correspond à l'occurrence précédente de cette même première sous-fenêtre de recherche S choisie. Ces opérations d'obtention de vecteur d'énergie x(t) et de vecteur d'accumulation y(t), sont préférentiellement effectuées par le sous-module de traitement MT.

Puis, le module d'analyse MA compare (avec son sous-modue de comparaison CN) la valeur maximale Ec du vecteur d'accumulation « y(t+1) » en cours au seuil choisi η1(I). Si Ec est supérieure à η1(I), alors la synchronisation est obtenue. Dans le cas contraire, le module d'analyse MA réitère les opérations de cumul et de comparaison.

Tant que la comparaison effectuée par le module d'analyse MA indique que la valeur maximale Ec du vecteur d'accumulation y(t) en cours est inférieure au seuil choisi η1(I) et/ou qu'un nombre maximal d'itérations Nᵢ choisi n'est pas atteint, on réitère les opérations de cumul et de comparaison de valeur maximale Ec pour l'occurrence suivante de la sous-fenêtre de recherche S choisie.

On notera que le seuil choisi η1(I) est de préférence fonction du nombre maximal d'itérations Nᵢ choisi et de la largeur n_{S} de la sous-fenêtre S.

Si la valeur maximale Ec demeure inférieure au seuil choisi η1(I) lorsque le nombre maximal d'itérations Nᵢ choisi est atteint pour une sous-fenêtre considérée (par exemple la première choisie S), alors le module d'analyse MA réitère les opérations précitées avec une autre (nouvelle) sous-fenêtre (par exemple la suivante S+1) de la fenêtre de recherche W. Les opérations s'arrêtent lorsque le module d'analyse MA (en fait son sous-module de comparaison MN) obtient une valeur maximale Ec supérieure au seuil choisi η1(I). On notera cependant qu'il est possible de balayer toutes les sous-fenêtres S de la fenêtre de recherche W sans obtenir de valeur maximale Ec supérieure au seuil choisi η1(I). Dans ce dernier cas, la synchronisation ne peut pas être trouvée et donc la station de base cible SBj ne peut pas (a priori) être utilisée pour participer au soft handover de l'équipement radio UEi.

Dans ce qui précède, il a été indiqué que le module d'analyse MA utilisait une première position temporelle d_{S} choisie d'une première sous-fenêtre de recherche S de largeur n_{S} choisie. C'est de préférence le module de définition MD qui définit (choisit) non seulement cette largeur n_{S} mais également cette première position temporelle d_{S}. Par exemple, la première sous-fenêtre de recherche S peut être définie par l'intervalle de positions temporelles [d_{S} - nₛ/2, d_{S} + nₛ/2], qui est centré sur la première position temporelle d_{S}.

Le choix de la première position temporelle d_{S} peut par exemple se faire (par le module de définition MD) en fonction d'un modèle déterministe prédéfini et/ou d'une procédure d'apprentissage statistique.

Le modèle déterministe prédéfini peut par exemple consister à choisir la première position temporelle d_{S} dans une table de correspondance entre des valeurs de grandeur et des positions temporelles. Comme cela est non limitativement illustré sur la figure 2, cette table de correspondance peut par exemple être stockée dans des moyens de stockage BD du dispositif D, auquel est au moins couplé le module de définition MD. Ces moyens de stockage BD peuvent se présenter sous n'importe quelle forme connue de l'homme de l'art, et notamment sous la forme d'une mémoire ou d'une base de données.

On notera que le contenu de la table de correspondance précitée peut être prédéfini, ou bien constitué à partir des valeurs de grandeur (ici RSCP) qui correspondent aux positions temporelles pour lesquelles une synchronisation a été obtenue.

Cette table de correspondance peut éventuellement comprendre pour chaque position temporelle la prochaine position temporelle la plus probable.

Si la table de correspondance est prédéfinie, alors, chaque fois que le module de définition MD doit définir une première position temporelle d_{S} consécutivement à la réception d'une valeur de grandeur (ici RSCP), il accède aux moyens de stockage BD pour déterminer, dans la table de correspondance qu'ils stockent, la première position temporelle d_{S} qui lui correspond (le mieux).

Si la table de correspondance est constituée (et enrichie) au fur et à mesure, en fonction des synchronisations réussies, c'est de préférence le module d'analyse MA (et plus précisément son sous-module de comparaison MN) qui l'alimente en couples (position temporelle, valeur de grandeur) pour lesquels des synchronisations ont été réussies.

La procédure d'apprentissage statistique peut par exemple consister à déterminer dans la table de correspondance (prédéfinie ou constituée au fur et à mesure) la position temporelle qui est la plus probable compte tenu de la valeur de grandeur qui a été fournie par l'équipement radio UEi. Cette position temporelle déterminée est alors la première position temporelle choisie d_{S}. Chaque fois que le module de définition MD doit définir une première position temporelle d_{S} consécutivement à la réception d'une valeur de grandeur (ici RSCP), il accède aux moyens de stockage BD pour déterminer, dans la table de correspondance qu'ils stockent, la position temporelle qui correspond à cette valeur de grandeur reçue.

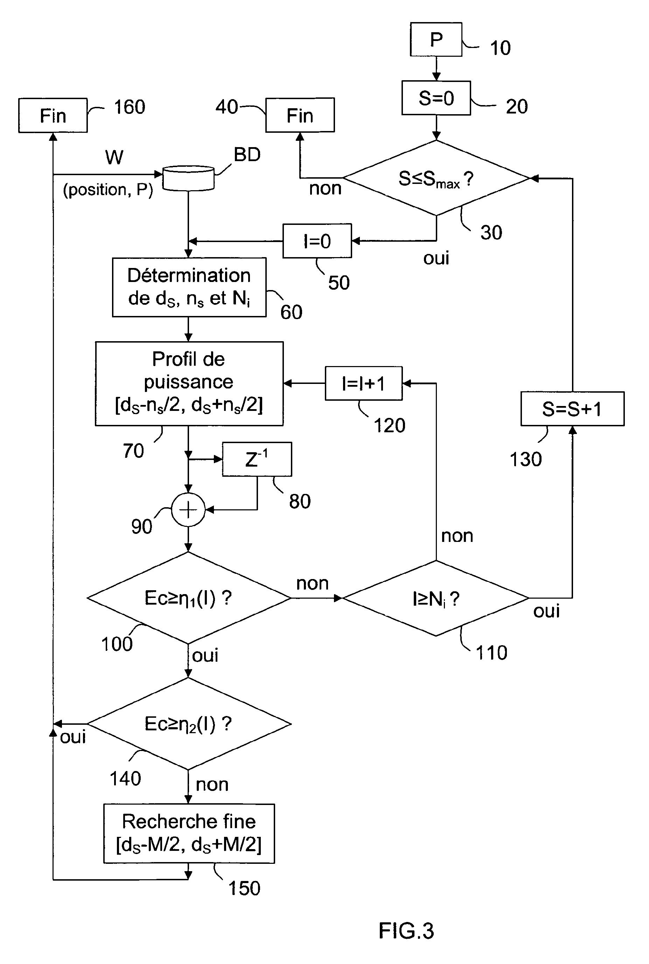

On va maintenant décrire un exemple complet d'algorithme permettant de mettre en oeuvre un procédé de recherche de synchronisation selon l'invention selon le premier mode de réalisation décrit ci-dessus, en référence à la figure 3.

L'algorithme commence par une étape 10 dans laquelle le dispositif D d'une station de base cible SBj reçoit une valeur de grandeur P en provenance d'un équipement radio UEi.

Puis, dans une étape 20, on met à la valeur 0 une variable S qui représente une sous-fenêtre de recherche de la fenêtre de recherche W considérée, et qui peut prendre des valeurs comprises entre 0 et Sₘₐₓ.

Puis, dans une étape 30, on effectue un test afin de déterminer si la valeur de la variable S est inférieure à Sₘₐₓ. Dans la négative (S > Sₘₐₓ), l'algorithme se termine (étape 40) et l'on n'a pas réussi à se synchroniser. Dans l'affirmative (S ≤ Sₘₐₓ), on passe à une étape 50.

Dans l'étape 50, on met à la valeur 0 une variable I qui représente les itérations (nombre de boucles) à effectuer pour une sous-fenêtre de recherche S (de largeur nₛ) de la fenêtre de recherche W considérée, et qui peut prendre des valeurs comprises entre 0 et Nᵢ. Par exemple Nᵢ est égale à 5.

Puis, dans une étape 60, on définit (choisit) la largeur n_{S} d'une première sous-fenêtre de recherche S et une première position temporelle d_{S} au sein de cette première sous-fenêtre de recherche S, en accédant à la base de données BD. Par exemple, la première sous-fenêtre de recherche S peut être définie par l'intervalle de positions temporelles [d_{S} - nₛ/2, d_{S} + nₛ/2], qui est centré sur la première position temporelle d_{S}.

Les étapes 10 à 60 constituent la première étape du procédé selon l'invention. Elles sont par exemple effectuées par le module de définition MD (au moins lors de la toute première boucle (d'initialisation)).

Puis, dans une étape 70, on commence par tenter de corréler le vecteur de N échantillons numériques instantanés du signal reçu de l'équipement radio UEi au code qui est propre à cet équipement radio UEi et qui correspond (initialement) à la (première) position temporelle d_{S} choisie au sein de la sous-fenêtre S considérée. Puis, en cas de corrélation on détermine le module au carré de chacun des N échantillons numériques de ce vecteur corrélé afin d'obtenir un vecteur d'énergie x(t).

La partie de cette étape 70 qui est relative à la corrélation est par exemple effectuée par le sous-module de corrélation MC, tandis que sa partie relative à la détermination des modules au carré est par exemple effectuée par le sous-module de traitement MT.

Puis, dans une étape 80, on applique un retard choisi au vecteur d'énergie x(t) obtenu à l'étape 70.

Puis, dans une étape 90, on cumule le vecteur d'énergie x(t) retardé à l'étape 80 avec le vecteur d'accumulation y(t-1) précédent, de manière à obtenir le vecteur d'accumulation y(t) en cours.

Les étapes 80 et 90 sont par exemple effectuées par le sous-module de traitement MT.

Puis, dans une étape 100, on détermine la valeur maximale d'énergie Ec du vecteur d'énergie qui est représenté par le vecteur d'accumulation y(t) en cours (obtenu à l'étape 90), et on effectue un test pour déterminer si cette valeur maximale Ec est supérieure à un premier seuil choisi η1(I). Dans la négative (Ec < η1(I) on passe à une étape 110, tandis que dans l'affirmative (Ec ≥ η1(I) on passe à une étape 140 sur laquelle on reviendra plus loin.

La partie de l'étape 100 qui est relative à la détermination d'une valeur maximale Ec est par exemple effectuée par le sous-module de traitement MT, tandis que sa partie relative au test est par exemple effectuée par le sous-module de comparaison MN.

Dans l'étape 110, on effectue un test pour déterminer si la valeur en cours de la variable d'itération I est supérieure au nombre maximal d'itérations Nᵢ choisi à l'étape 60. Dans la négative (I < Nᵢ) on passe à une étape 120, tandis que dans l'affirmative (I ≥ Nᵢ) on passe à une étape 130 sur laquelle on reviendra plus loin.

L'étape 120 concerne une situation dans laquelle la valeur maximale Ec du vecteur d'accumulation y(t) en cours est inférieure au premier seuil choisi η1(I), alors que le nombre maximal d'itérations Nᵢ choisi n'a pas encore été atteint pour la sous-fenêtre S considérée. Dans ce cas, on incrémente d'une unité la valeur en cours de la variable d'itération I (I → I+1), et l'on retourne effectuer l'étape 70 avec un nouveau vecteur de N échantillons numériques instantanés du signal reçu, qui correspond à une nouvelle occurrence de la sous-fenêtre S considérée.

L'étape 130 concerne une situation dans laquelle la valeur maximale Ec du vecteur d'accumulation y(t) en cours est inférieure au premier seuil choisi η1(I), alors que le nombre maximal d'itérations Nᵢ choisi a été atteint pour la sous-fenêtre S considérée. Dans ce cas, on incrémente d'une unité la valeur en cours de la variable de sous-fenêtre S (S → S+1), et l'on retourne effectuer l'étape 30, puis éventuellement les étapes 50 et suivantes avec une nouvelle sous-fenêtre de la fenêtre de recherche W si la nouvelle valeur de la variable S est inférieure ou égale à Sₘₐₓ.

Les étapes 140 et 150 sont optionnelles. Elles sont destinées à déterminer si le test effectué à l'étape 100 est très fiable et dans la négative à affiner la détermination de la position temporelle correspondant au signal reçu. En l'absence de ces deux étapes on passe directement à une étape 160 sur laquelle on reviendra plus loin.

Dans l'étape 140, on effectue un test pour déterminer si la valeur maximale Ec du vecteur d'accumulation y(t) en cours est supérieure à un second seuil choisi η2(I), lui-même strictement supérieur au premier seuil choisi η1(I). Dans la négative (Ec < η2(I)) on passe à l'étape 150, tandis que dans l'affirmative (Ec ≥ η2(I)) on passe à l'étape 160.

L'étape 150 concerne une situation dans laquelle la valeur maximale Ec du vecteur d'accumulation y(t) en cours est inférieure au second seuil choisi η2(I) pour la sous-fenêtre S considérée. Dans ce cas, on définit une sous-fenêtre centrée sur la position temporelle considérée mais présentant une largeur (beaucoup) plus petite que celle de la sous-fenêtre S et définie par l'intervalle de positions temporelles [d_{S} - M/2, d_{S} + M/2], avec M << nₛ. Par exemple, M peut être est choisi égal à 2 lorsque nₛ est égal à 50. On passe ensuite à l'étape 160.

L'étape 160 est effectuée lorsque l'on a réussi à se synchroniser (c'est-à-dire à déterminer la position temporelle d_{S} qui correspond au signal reçu de l'équipement radio UEi), puisque l'on a Ec ≥ η1(I) et/ou Ec ≥ η2(I). Il s'agit de l'étape finale de l'algorithme (en cas de synchronisation). On notera que lorsque la table de correspondance (stockée dans les moyens de stockage BD) est constituée au fur et à mesure, on stocke dans la table de correspondance le couple (position temporelle d_{S}, valeur de grandeur reçue) qui a permis la synchronisation.

Les étapes 100 à 160 sont par exemple effectuées par le sous-module de comparaison MN.

Les étapes 70 à 160 constituent la seconde étape du procédé selon l'invention.

On notera que le dispositif de recherche de synchronisation D selon l'invention, et notamment son module de définition MD et son module d'analyse MA, peuvent être réalisés sous la forme de circuits électroniques, de modules logiciels (ou informatiques), ou d'une combinaison de circuits et de logiciels.

L'invention ne se limite pas aux modes de réalisation de dispositif de recherche de synchronisation, de station de base (ou analogue) et de procédé de recherche de synchronisation décrits ci-avant, seulement à titre d'exemple, mais elle englobe toutes les variantes que pourra envisager l'homme de l'art dans le cadre des revendications ci-après.

## Revendications

1. Procédé de recherche de synchronisation avec un équipement de communication radio (UEi) pour une station de base (SBj) dite cible d'un réseau d'accès radio (RAR) d'un réseau de radiocommunication (RC), au sein d'une cellule de taille donnée correspondant à une fenêtre de recherche présentant une première largeur, ledit procédé comprenant i) une première étape dans laquelle on définit une sous-fenêtre de recherche de largeur inférieure à ladite première largeur, et ii) une seconde étape dans laquelle on compare à un seuil choisi la valeur maximale de l'énergie d'un vecteur d'énergie représentatif du signal reçu dudit équipement (UEi) et correspondant à une position temporelle choisie de ladite sous-fenêtre de recherche, et si ladite valeur maximale est inférieure au seuil choisi on cumule ce vecteur d'énergie avec le vecteur d'énergie obtenu précédemment pour cette même sous-fenêtre de recherche, puis on compare audit seuil choisi la valeur maximale de l'énergie du vecteur d'énergie résultant dudit cumul, et on réitère ce cumul et cette comparaison de seuil pour ladite sous-fenêtre de recherche tant que la valeur maximale demeure inférieure audit seuil choisi et/ou qu'un nombre maximal d'itérations choisi n'est pas atteint.

2. Procédé selon la revendication 1, dans lequel, lors de la seconde étape, si ladite valeur maximale demeure inférieure audit seuil choisi lorsque ledit nombre maximal d'itérations choisi est atteint, on recommence intégralement ladite seconde étape avec une nouvelle sous-fenêtre de ladite fenêtre de recherche.

3. Procédé selon l'une quelconque des revendications 1 et 2, dans lequel on définit la sous-fenêtre de recherche en fonction d'une mesure d'une grandeur, représentative de la puissance des signaux reçus par ledit équipement (UEi) en provenance de ladite station de base cible (SBj), fournie audit réseau d'accès radio (RAR) par ledit équipement (UEi), dans le cadre d'un transfert d'appel ou de session de type dit « doux ».

4. Procédé selon l'une des revendications 3, dans lequel le réseau de radiocommunication est de type WCDMA, et on utilise, lors de la première étape, une grandeur appelée RSCP.

5. Procédé selon l'une des revendications 1 à 4, dans lequel on choisit, lors de la première étape, ladite première position temporelle en fonction d'un modèle déterministe prédéfini et/ou d'une procédure d'apprentissage statistique.

6. Procédé selon la revendication 5, dans lequel ledit modèle déterministe prédéfini consiste à choisir ladite position dans une table de correspondance entre des valeurs de grandeur et des positions temporelles.

7. Procédé selon la revendication 5, dans lequel ladite procédure d'apprentissage statistique consiste à déterminer dans une table, de correspondance entre des valeurs de grandeur et des positions temporelles, la position temporelle qui est la plus probable compte tenu de ladite valeur de grandeur fournie par ledit équipement (UEi), cette position temporelle déterminée étant alors ladite première position temporelle choisie.

8. Procédé selon l'une des revendications 6 et 7, dans lequel ladite table de correspondance est prédéfinie.

9. Procédé selon l'une des revendications 6 et 7, dans lequel ladite table de correspondance est constituée à partir des valeurs de grandeur qui correspondent aux positions temporelles pour lesquelles une synchronisation a été obtenue.

10. Procédé selon l'une des revendications 1 à 9, dans lequel on choisit, lors de la première étape, une largeur de sous-fenêtre égale à une largeur maximale de fenêtre de recherche que ladite station de base cible (SBj) peut traiter.

11. Dispositif de recherche de synchronisation avec un équipement de communication radio (UEi) pour une station de base (SBj) dite cible d'un réseau d'accès radio (RAR) d'un réseau de radiocommunication (RC), au sein d'une cellule de taille donnée correspondant à une fenêtre de recherche présentant une première largeur, ledit dispositif comprenant i) des moyens de définition (MD) agencés pour définir une sous-fenêtre de recherche de largeur inférieure à ladite première largeur, et ii) des moyens d'analyse (MA) agencés pour comparer à un seuil choisi la valeur maximale de l'énergie d'un vecteur d'énergie représentatif du signal reçu dudit équipement (UEi) et correspondant à une position temporelle choisie de ladite sous-fenêtre de recherche, et si ladite valeur maximale est inférieure au seuil choisi pour cumuler son vecteur d'énergie avec le vecteur d'énergie obtenu précédemment pour cette même sous-fenêtre de recherche, puis pour comparer audit seuil choisi la valeur maximale de l'énergie du vecteur d'énergie résultant dudit cumul, et pour réitérer ce cumul et cette comparaison de seuil pour ladite sous-fenêtre de recherche tant que la valeur maximale demeure inférieure audit seuil choisi et/ou qu'un nombre maximal d'itérations choisi n'est pas atteint.

12. Dispositif selon la revendication 11, dans lequel lesdits moyens d'analyse (MA) sont agencés, lorsque ledit nombre maximal d'itérations choisi est atteint et que la valeur maximale demeure inférieure audit seuil choisi, pour recommencer intégralement leur analyse avec une nouvelle sous-fenêtre de ladite fenêtre de recherche.

13. Dispositif selon l'une des revendications 11 et 12, dans lequel lesdits moyens de définition (MD) sont agencés pour définir la sous-fenêtre de recherche en fonction d'une mesure d'une grandeur, représentative de la puissance des signaux reçus par ledit équipement (UEi) en provenance de ladite station de base cible (SBj), fournie audit réseau d'accès radio (RAR) par ledit équipement (UEi) dans le cadre d'un transfert d'appel ou de session de type dit « doux ».

14. Dispositif selon la revendication 13, dans lequel le réseau de radiocommunication est de type WCDMA et lesdits moyens de définition (MD) sont agencés pour utiliser une grandeur appelée RSCP.

15. Dispositif selon l'une des revendications 11 à 14, dans lequel lesdits moyens de définition (MD) sont agencés pour choisir ladite première position temporelle en fonction d'un modèle déterministe prédéfini et/ou d'une procédure d'apprentissage statistique.

16. Dispositif selon la revendication 15, dans lequel lesdits moyens de définition (MD) sont agencés pour mettre en oeuvre un modèle déterministe prédéfini consistant à choisir ladite position dans une table de correspondance entre des valeurs de grandeur et des positions temporelles, stockée dans des moyens de stockage (MB).

17. Dispositif selon la revendication 15, dans lequel lesdits moyens de définition (MD) sont agencés pour mettre en oeuvre une procédure d'apprentissage statistique consistant à déterminer dans une table, de correspondance entre des valeurs de grandeur et des positions temporelles, stockée dans des moyens de stockage (MB), la position temporelle qui est la plus probable compte tenu de ladite valeur de grandeur fournie par ledit équipement (UEi), cette position temporelle déterminée étant alors ladite première position temporelle choisie.

18. Dispositif selon l'une des revendications 16 et 17, dans lequel ladite table de correspondance est prédéfinie.

19. Dispositif selon l'une des revendications 16 et 17, dans lequel lesdits moyens d'analyse (MA) sont agencés pour constituer ladite table de correspondance à partir des valeurs de grandeur qui correspondent aux positions temporelles pour lesquelles une synchronisation a été obtenue.

20. Dispositif selon l'une des revendications 11 à 19, dans lequel lesdits moyens de définition (MD) sont agencés pour choisir une largeur de sous-fenêtre égale à une largeur maximale de fenêtre de recherche que ladite station de base cible (SBj) peut traiter.

21. Station de base (SBj), pour un réseau d'accès radio (RAR) d'un réseau de radiocommunication (RC), ladite station de base (SBj) comportant un dispositif de recherche de synchronisation (D) selon l'une des revendications 11 à 20.
